# EUROPEAN PATENT APPLICATION

(11) **EP 2 381 484 A1**
(43) Date of publication of application: **26.10.2011**
(21) Application number: 11162360.9
(22) Date of filing: 14.04.2011
(51) Int. Cl.: H01L 31/042, F24J 2/52

(54) **Improved structure for ground support of photovoltaic modules and photovoltaic plant provided with said structure**

(30) Priority: 22.04.2010 IT MI20100690
(71) Applicant: Valente S.p.A., 35011 Campodarsego (PD) (IT)
(72) Inventor: Valente, Alberto, 35011, CAMPODARSEGO (IT)
(74) Representative: Martegani, Franco

(57) **Abstract**

A structure for ground support of photovoltaic modules or panels, of the type comprising a plurality of piles (5) embedded in the ground which sustain traverses (6) supporting the above-mentioned panels (2) by means of cross current elements (8), in which said piles (5) are made of pre-stressed reinforced concrete.

In relation to the known structures for ground support of photovoltaic modules, the structure according to the invention offers the advantage of isolating the electrical part of the plant, consisting of the photovoltaic panels, from the ground which supports the structure. In this way the creation of stray currents is avoided and, with them, also the formation of structural weak points where there is the danger of rust forming on said structure.

## Description

### DISCLOSURE

The present invention concerns an improved structure for ground support of photovoltaic modules. The invention also extends to the photovoltaic plant provided with said structure.

The field of the invention is that of structures used to support, on the ground or in the open field, the solar panels forming the photovoltaic plants.

The supporting structures currently known are made entirely of metal, which is particularly suited to allowing adjustment of the panels with respect to the ground support.

However, the known solutions referred to above have the drawback that, since they are made of metal, they are not able to withstand the corrosive action of the atmospheric agents, with the simultaneous presence of stray currents due to operation of the plant. Corrosion is particularly marked at the collar of the piles embedded in the ground, which constitute the base of the supporting structure. In turn the stray currents along the entire metal structure of the plant extend the corrosion also to the embedded part of the piles, and to the sections where the panels rest on the structure.

A further drawback of the known metal supporting structures of photovoltaic plants is also represented by their lightness, which makes the system particularly unstable to the action of the wind and other mechanical stress, for example due to heavy rain, snow and similar.

The main object of the present invention is to provide a new structure for the ground support of photovoltaic modules which, in relation to those currently known, solves the problems connected with the formation and transmission of stray currents along said structure, thus eliminating or drastically reducing the formation of rusty parts, responsible for dangerous breakages in the plant.

A further object of the invention is to provide a structure of the above type which is more stable to external mechanical stress than analogous structures of traditional type.

A further object of the present invention is to offer a new ground support structure for photovoltaic modules which, unlike those currently known, is made of less expensive materials but nevertheless with strength at least equal to that of the analogous systems in the known art.

These and further objects are achieved by the structure and plant of claims 1 and 14 respectively. Preferred embodiments of the invention are described in the remaining claims.

In relation to the known structures for the ground support of photovoltaic modules, the structure according to the invention has the advantage of isolating the electrical part of the plant, consisting of the photovoltaic panels, from the ground which supports the structure. In this way, the creation of stray currents is avoided and, with them, also the formation of structural weak points where there is the danger of rust forming on said structure.

A further advantage of the structure of the invention is represented by the improved stability it offers, due to the high specific gravity of the concrete constituting both the embedded piles and the upper traverses.

In addition to these advantages, the structure of the invention has a lower cost resulting from the use of concrete in the construction thereof.

These and further objects, advantages and characteristics emerge from the following description of a preferred embodiment of the structure and plant of the invention illustrated, by way of non-limiting example, in the figures of the accompanying drawings.

In them:
- figure 1 illustrates an overall perspective view of the photovoltaic plant of the invention;
- figure 2 illustrates an enlarged detail of the plant of figure 1;

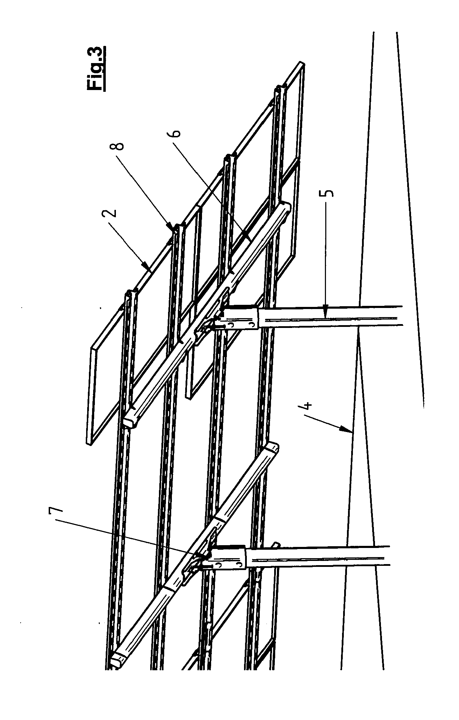

- figure 3 illustrates the detail of figure 2 seen from below;

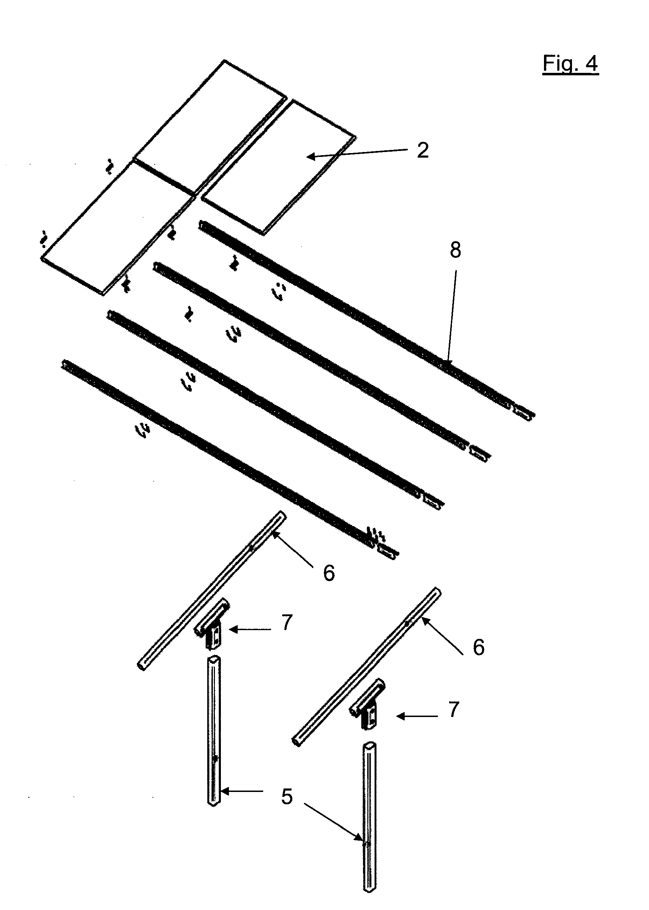

- figure 4 illustrates an exploded view of the plant of the preceding figures;
- figure 5 illustrates a variation of the embodiment of the plant of figure 1;
- figure 6 illustrates a detail of the articulated joint in the plant of the invention;
- figure 7 illustrates an exploded view of the articulated joint of figure 6;
- figures 8 to 10 illustrate some construction details of the articulated joint of figure 6;
- figures 11 and 12 illustrate construction variations of the articulated joint of the preceding figures;
- figure 13 illustrates in section the cross current element used on the structure of the invention; and

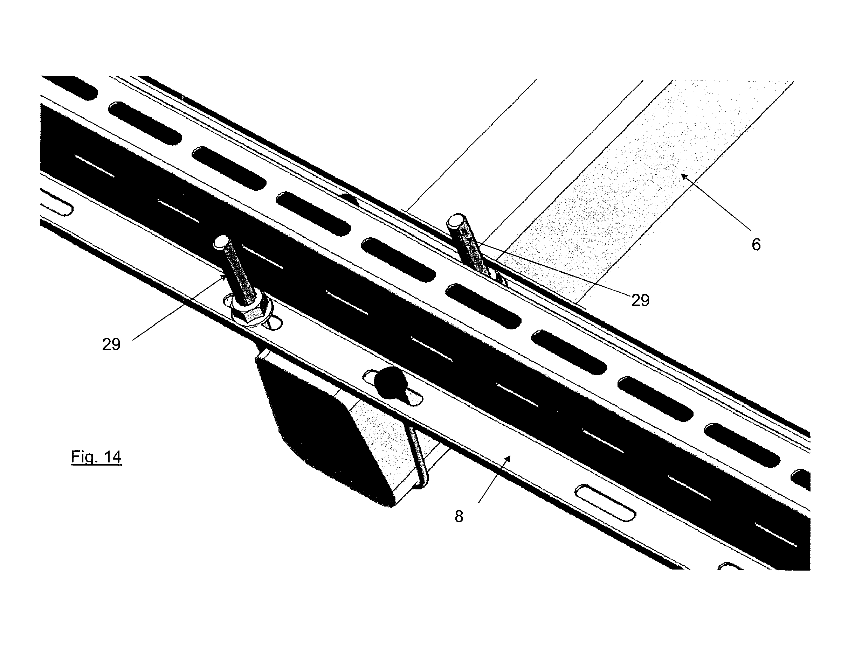

- figure 14 illustrates in perspective an example of a solution for fixing the cross current element of figure 13 on an inclinable traverse of the plant of figure 1.

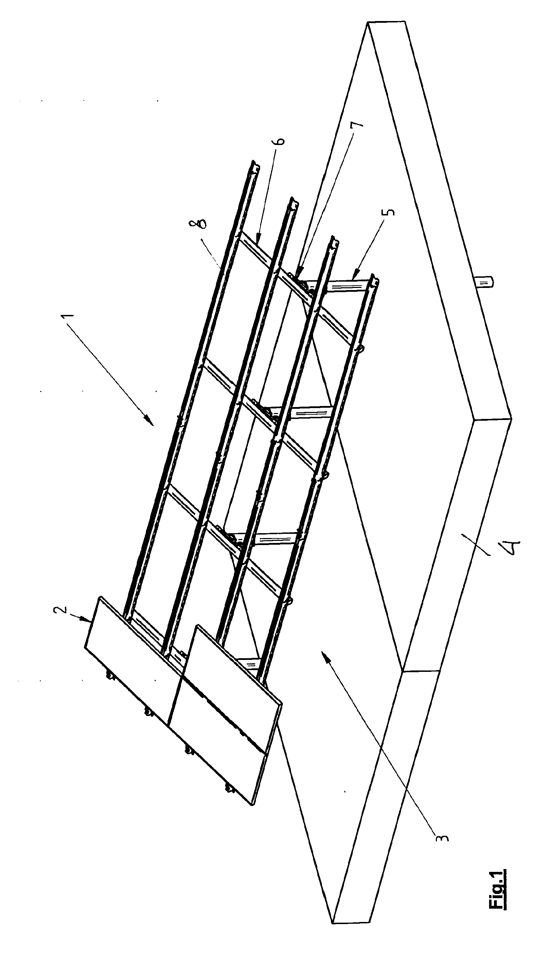

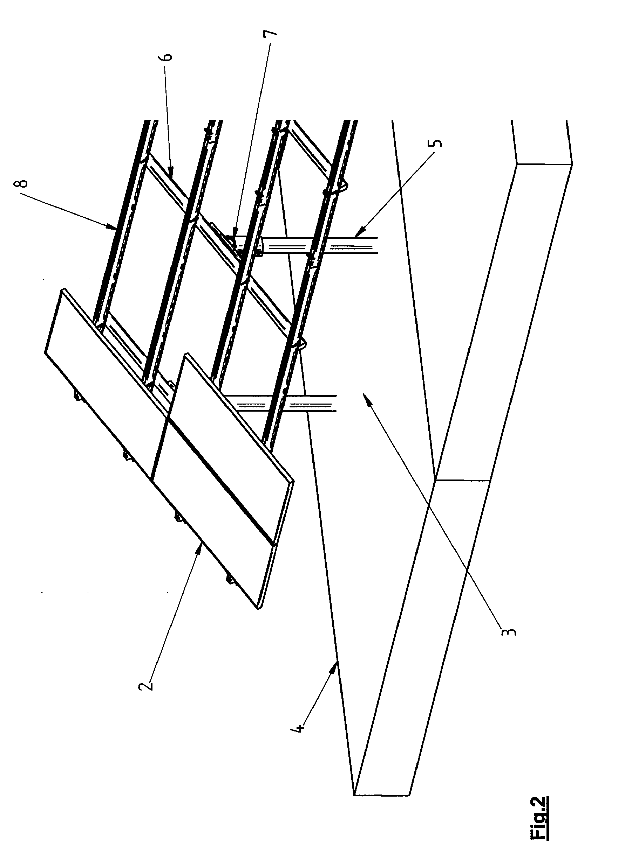

The photovoltaic plant of the invention is indicated overall by 1 in figure 1. It consists of a plurality of photovoltaic panels or modules 2, in turn supported by a structure 3 for supporting the same on the ground 4. As better illustrated in figure 2, the above supporting structure 3 consists of a plurality of piles 5 made of concrete, preferably pre-stressed reinforced concrete, planted in the ground 4 to a depth sufficient to ensure stability of the plant. Traverses 6, made of the same construction material as the piles 5, are furthermore secured on these piles 5, with direction adjustable by means of an appropriate articulated joint 7. Metal cross current elements 8, on which the panels 2 rest, are fixed crosswise to the above-mentioned traverses 6.

From the description provided, it can be seen that the material forming the piles 5 and traverses 6 in pre-stressed reinforced concrete isolates the photovoltaic panels 2 from the ground 4. This has the advantage of inhibiting the formation of stray currents along the supporting structure 3 and, therefore, obstructing the creation of rust which can weaken or reduce the supporting capacity of said structure 3.

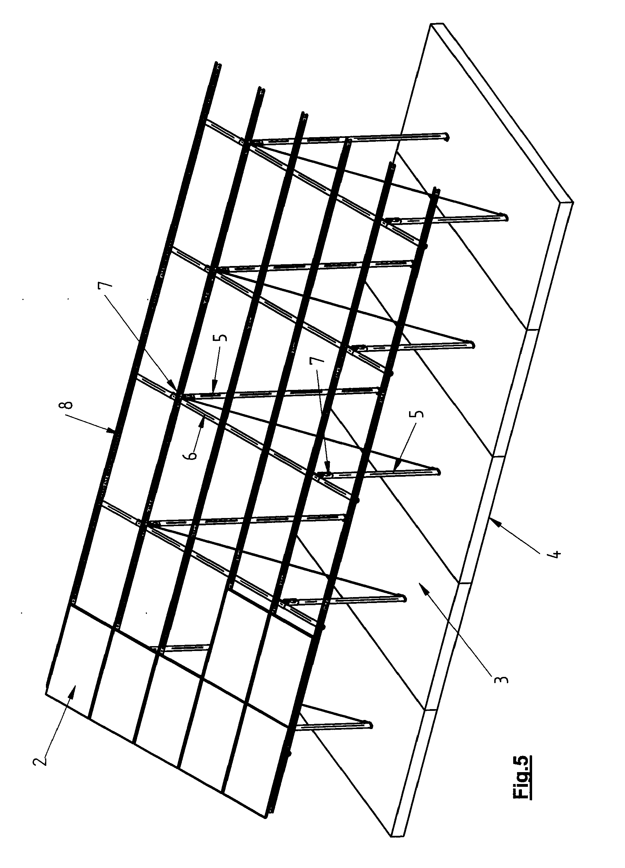

In the variation of figure 5, each concrete traverse 6 of the supporting structure 3 is sustained by two piles 5, also made of concrete, provided with adjustable connection to the respective articulated joints 7. In this variation the presence of the articulated joints 7 allows a choice of the inclination of the traverses 6 with respect to the piles 5 during assembly of the supporting structure 3.

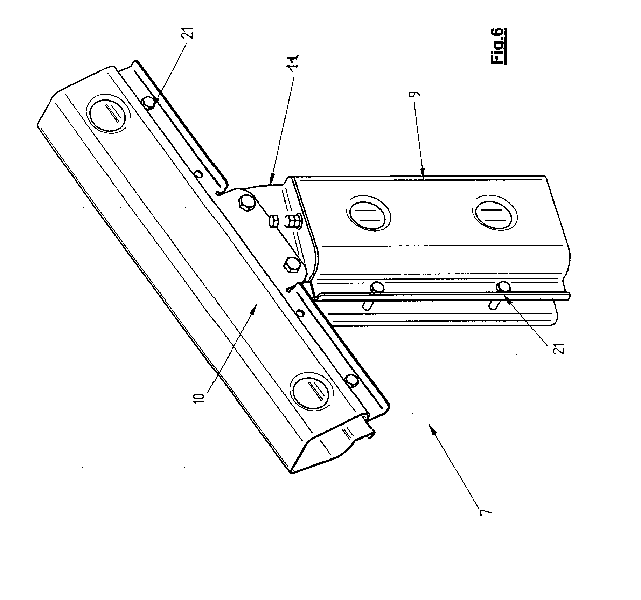

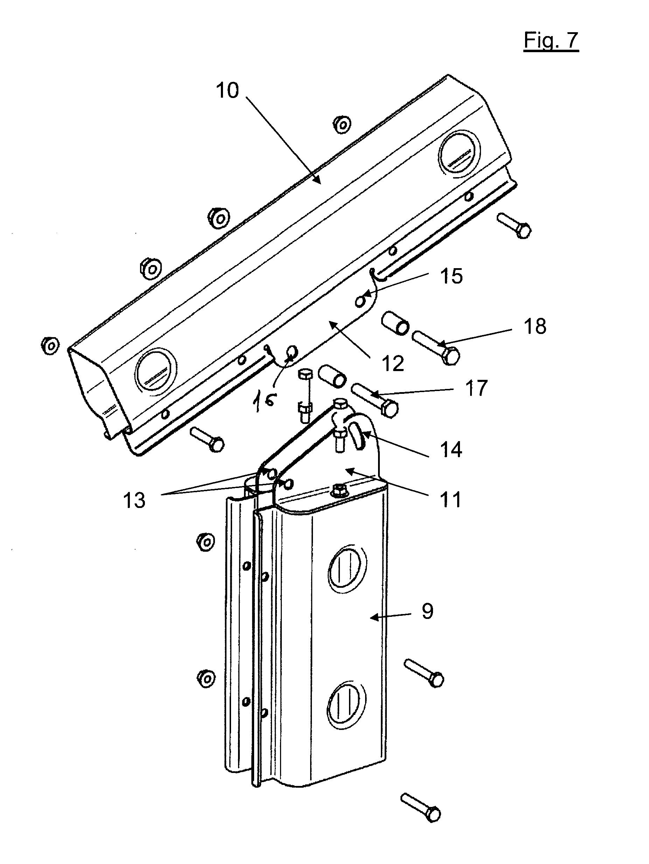

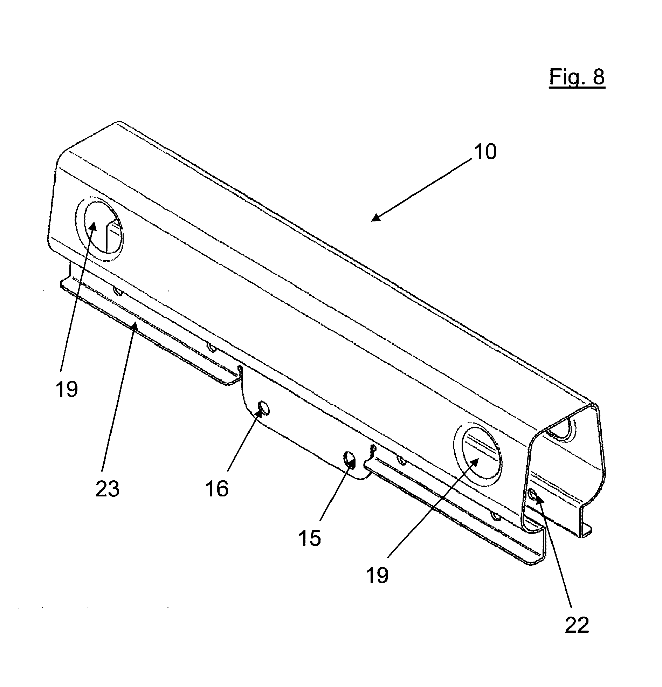

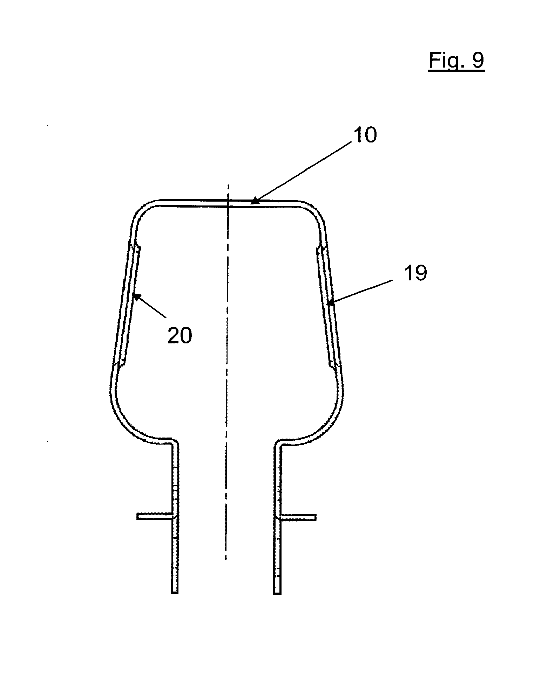

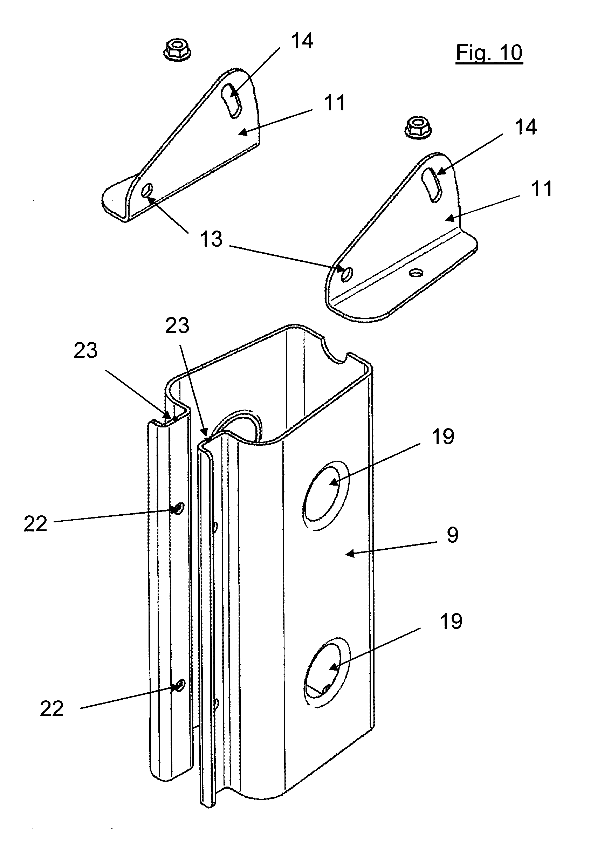

The articulated joint 7 for connecting the concrete pile 5 to the concrete traverse 6 at an adjustable inclination, better represented in figure 6, comprises a stirrup 9 for connection to the head of the corresponding pile 5 and a support 10 for connection to the respective traverse 6, both having a substantially U-shaped configuration. The same support 10 is in turn hinged to the stirrup 9 at the level of the fins 11 associated with said stirrup 9, and the fins 12 fixed to the above-mentioned support 10 (figures 8 and 9). The same fins 11, two on the stirrup 9, are provided with a hole 13 and an arc-shaped eyelet 14 (figure 10). Analogous holes 15 and 16 are present on the corresponding fins 12 of the support 10 (figure 8). The oscillation of these fins 12 on the fins 11 of the stirrup 9 is therefore obtained by rotation around a pivot 17, in turn arranged inside said holes 13 and 16 (figure 7).

Control and amplitude of the rotation between these parts are provided by a pivot 18, housed in the hole 15 of the fins 12 and in the eyelet 14 of the fins 11. Advantageously, the above-mentioned pivots 17 and 18 are provided with threaded heads, which allow the angle of inclination of the articulated joint to be fixed by means of bolts.

Preferably both the stirrup 9 and the support 10 of the articulated joint 7 are provided with lateral apertures 19, with walls 20 flared inwards or in the direction of the pile 5 and traverse 6, thus facilitating gripping of the above-mentioned parts of the articulated joint on the concrete constituting said pile and said traverse.

Tightening of the stirrup 9 to the head of the pile 5 and of the support 10 to the body of the traverse 6 is completed by means of screws 21, housed in corresponding holes 22 obtained on the protruding appendixes 23 of the stirrups 9 and support 10, both substantially U-shaped (figures 6, 8 and 10).

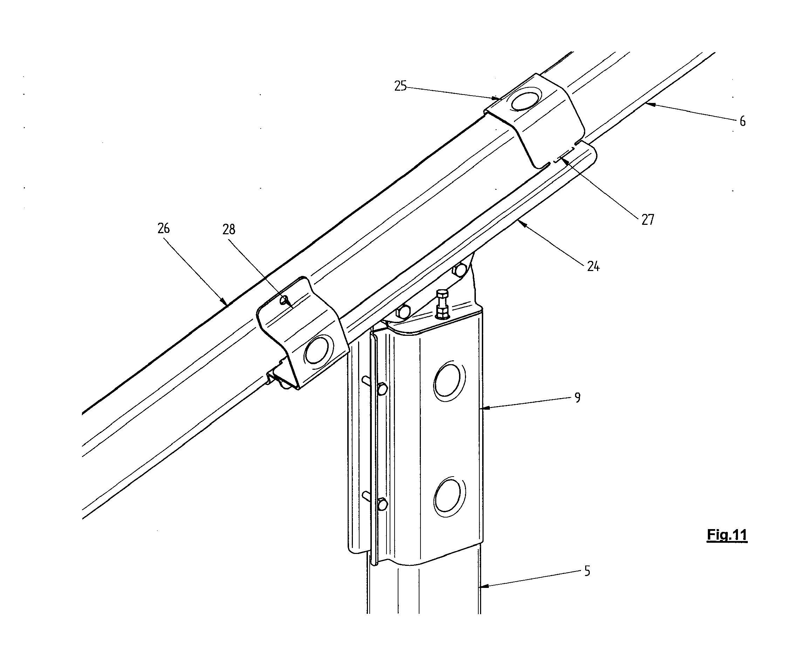

In the variation of figure 11 the articulated joint between the pile 5 and the traverse 6 integrates the stirrup 9 with a different support for the traverse 6, formed of a plate 24 and clamps 25, in turn provided with bent tabs 26 locking inside corresponding slots 27 obtained on said plate 24.

Final fixing of the clamps 25 on the plate 24, thus locking the traverse 6, is obtained by means of screws (not illustrated) housed in the hole 28 of the respective tab 26 at the level of the hole (not illustrated) present on the plate 24.

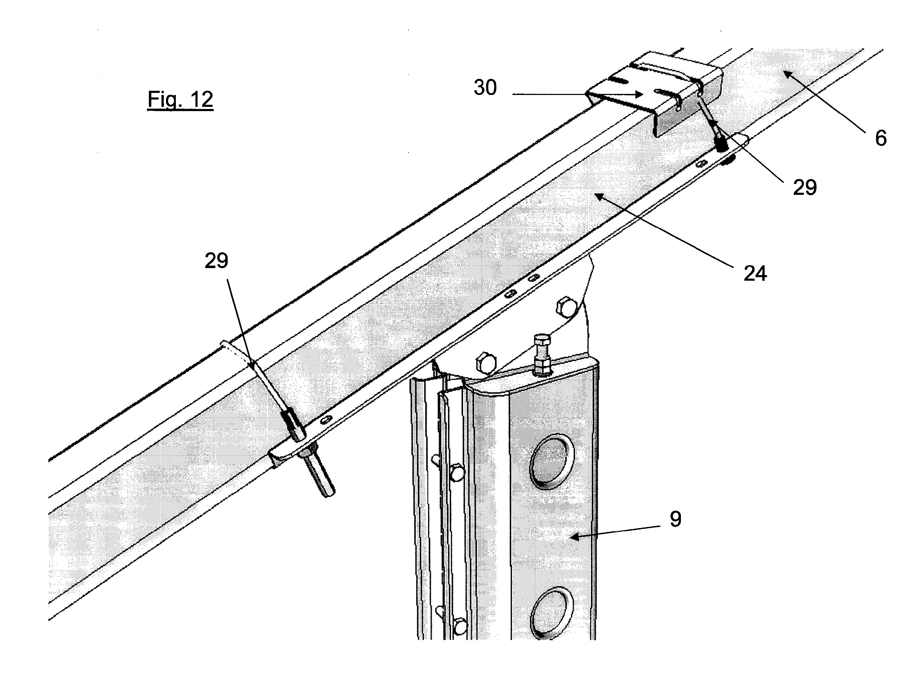

In the variation of figure 12, fastening of the concrete traverse 6 to the plate 24 is obtained by means of flexible tie rods 29, if necessary with the addition of a reinforcing plate 30.

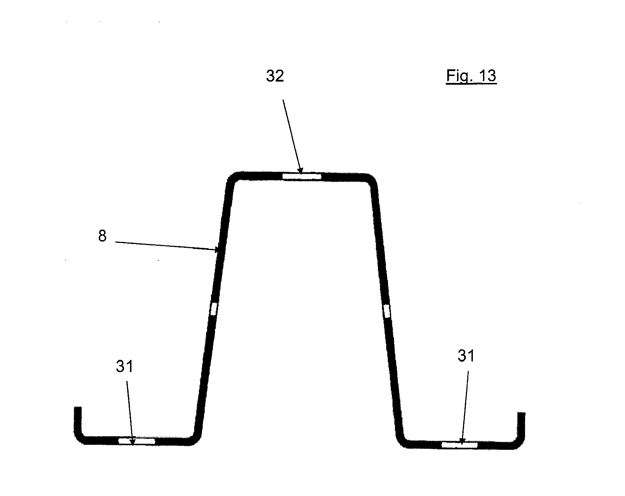

The cross current element 8 of figure 13 also has a substantially U-shaped configuration, provided with lateral fins 31 bent outwards and suitable for resting against the corresponding traverse 6. The upper part 32 of the cross current element 8 supports the panel 2. Advantageously the cross current elements 8 are made of metal, preferably aluminium. Fastening of the cross current elements 8 to the traverses 6 is furthermore advantageously obtained by means of the above-mentioned flexible tie rods 29.

Modifications can be made to the invention as described above and illustrated in order to obtain variations falling within the scope of the following claims. Thus, for example, the supporting structure 3 could comprise traverses 6 made of material other than pre-stressed reinforced concrete, the latter remaining nevertheless the component material of the piles 5.

## Claims

1. Structure for ground support of photovoltaic modules or solar panels, comprising a plurality of piles (5) fixed into the ground supporting some traverses (6) which sustain said panels (2) by means of cross current elements (8), **characterized in that** said piles (5) are made of concrete.

2. Structure as in claim 1, **characterized in that** said piles (5) are made of pre-stressed reinforced concrete.

3. Structure as in claim 1 or 2, **characterized in that** said traverses (6) are made of reinforced concrete, preferably pre-stressed reinforced concrete.

4. **Structure as in claim 1, characterized in that** it comprises an articulated joint (7) for connecting at an adjustable inclination said traverses (6) on said piles (5).

5. Structure as in claim 4, **characterized in that** said joint (7) comprises a stirrup (9) for proper connection to the corresponding head of the concrete pile (5), as well as a support (10) fixed to the corresponding traverse (6), hinge devices (11,12) being provided for connection with adjustable inclination between said stirrup (9) and said support (10).

6. Structure as in claim 5, **characterized in that** said hinge devices consist both of fins (11), designed on said stirrup (9) and equipped with a hole (13) and with an arc-shaped eyelet (14), and of fins (12), designed on said support (10) and equipped with analogous holes (15,16), the oscillation of such fins (12) on the fins (11) of said stirrup (9) being obtained by rotation around a pivot (17) positioned in turn inside said holes (13,16).

7. Structure as in claim 6, **characterized in that** control and wideness of the rotation of said support (10) on said stirrup (9) are provided by a pivot (18) located in said hole (15) of the fins (12) and in the eyelet (14) of the fins (11).

8. Structure as in claim 5, **characterized in that** said stirrup (9) and said support (10) have, in transverse section, a substantially "U"-shaped compliance, equipped with protruding appendixes (23).

9. Structure as in claim 5 or 6, **characterized in that** said stirrup (9) and said support (10) are equipped with holes (19) which borders (20) are internally bended, so to hang respectively on the head of said piles (5) and on said traverses (6).

10. Structure as in claim 9, **characterized in that** said support (10) comprises a plate (24) equipped with strips (25) having bended flaps (26), the latter being fixed respectively within slots (27) and holes (28) of the same plate (24), so to properly fasten on the latter the relevant traverse (6).

11. Structure as in claim 10, **characterized in that** it further comprises flexible guy ropes (29) for fixing said plate (24) to the corresponding traverse (6) and, respectively, for fixing said cross current elements (8) to said traverse (6).

12. Structure as in claim 11, **characterized in that** it further comprises a reinforce plate (30) in the contact area of said flexible guy rope (29) to said traverse (6).

13. Structure as in one or more of previous claims, **characterized in that** said cross current elements (8) have a substantially "U"-shaped form, with lateral end fins (31) externally bended.

14. Photovoltaic plant system fixed to the ground, **characterized in that** it is provided with a support structure as per one or more of previous claims from 1 to 13.
